# EUROPÄISCHE PATENTANMELDUNG

(11) **EP 2 166 757 A2**
(43) Veröffentlichungstag der Anmeldung: **24.03.2010**
(21) Anmeldenummer: 09010743.4
(22) Anmeldetag: 20.08.2009
(51) Int. Cl.: H04N 5/76

(54) **Bild- und/oder Tondaten-Verarbeitungs- und Speicherungssystem und Überwachungssystem**

(30) Priorität: 19.09.2008 DE 202008012473 U; 05.06.2009 DE 102009023997
(71) Anmelder: Dallmeier electronic GmbH & Co. KG., 93051 Regensburg (DE)
(72) Erfinder: Dallmeier, Dieter, 93186 - Pettendorf (DE)
(74) Vertreter: Röss, Walter Josef Alfred

(57) **Zusammenfassung**

Die vorliegende Erfindung betrifft ein Bild- und/oder Tondaten-Verarbeitungs- und Speicherungssystem sowie ein Überwachungssystem, welches das Bild- und/oder Tondaten-Verarbeitungs- und Speicherungssystem und eine Vielzahl daran angeschlossene Kameras enthält. Das Bild- und/oder Tondaten-Verarbeitungs- und Speicherungssystem beinhaltet dabei n voneinander unabhängigen Einheiten (20), wobei n eine natürliche Zahl größer gleich zwei ist und jede der Einheiten eine Datenverarbeitungsvorrichtung, welche einen ersten Abschnitt (24) enthält, der digitale Bild-und/oder Tondaten komprimiert, sowie eine erste Speichervorrichtung (26) und eine zweite Speichervorrichtung (28) aufweist, denen dieselben, von der Datenverarbeitungsvorrichung komprimierten Bild- und/oder Tondaten zur Speicherung zugeführt werden.

## Beschreibung

Die vorliegende Erfindung betrifft ein Bild- und/oder Tondaten-Verarbeitungs- und Speicherungssystem sowie ein Überwachungssystem, welches das Bild- und/oder Tondaten-Verarbeitungs- und Speicherungssystem und eine Vielzahl daran angeschlossene Kameras beinhaltet.

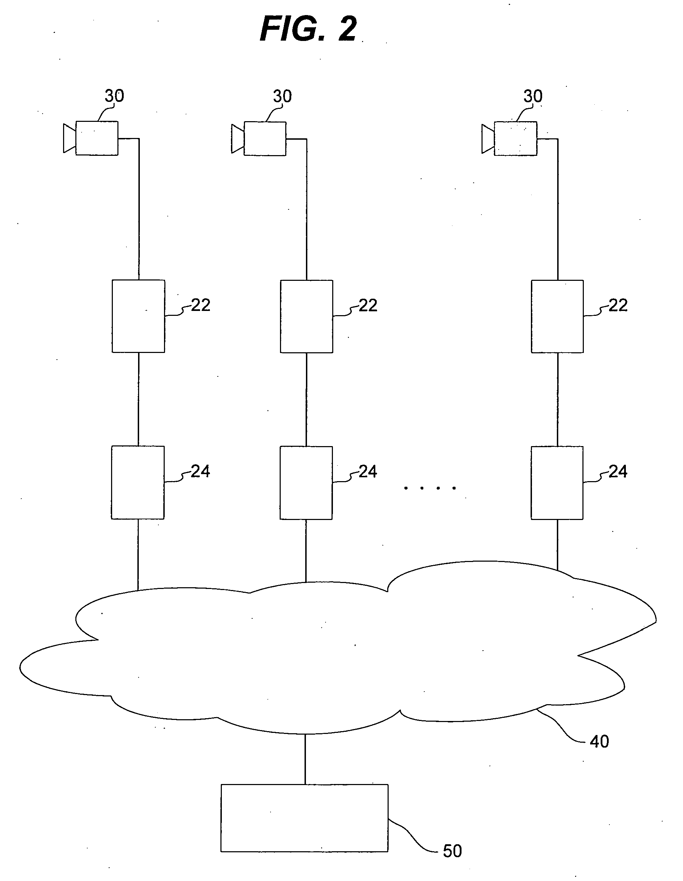

Bisher bekannte Überwachungssysteme bzw. -vorrichtungen (siehe Fig. 2), welche eine oder mehrere Szenen, beispielsweise das Geschehen an einem von vielen Menschen besuchten Ort, erfassen und speichern, enthalten üblicherweise eine Vielzahl von Kameras 30, welche Bilddaten und bei Vorhandenseins eines Mikrofons gegebenenfalls auch Tondaten der Szene(n) liefern. Werden zur Bild- und/oder Tonaufnahme Analogkameras verwendet, so sind die Kameras 30 jeweils an einen A/D-Wandler 22 angeschlossen, dem ein Codierer 24 zur Datenkomprimierung nachgeschaltet ist. Im Falle der Verwendung einer Digitalkamera sind die Kameras 30 jeweils direkt an den Codierer angeschlossen. Die Kamera 30, der optional vorhandene A/D-Wandler 22 und der Codierer 24 bilden zusammen einen Kanal einer Vielzahl von n Kanälen, wobei n eine ganze Zahl größer gleich 2 ist. Kamera, A/D-Wandler und Codierer werden dabei von einem Controller angesteuert. Die komprimierten Bild- und/oder Tondaten der n Kanäle werden über ein Netzwerk 40, beispielsweise ein lokales Netzwerk (LAN, Local Area Network), einer zentralen Speichervorrichtung 50 zugeführt, die zur Verwaltung der ihr zugeführten Daten von einem Controller angesteuert wird und zur Speicherung der Daten eine Vielzahl von Festplatten aufweist. Die Gesamtkapazität der Speichervorrichtung 50 liegt für etwa 30 Kanäle im Bereich von einigen Terabyte.

Der der Speichervorrichtung zugeordnete Controller sorgt bei dem bekannten Überwachungssystem entsprechend definierter Vorgaben für eine relativ effiziente Ausnutzung des vorhandenen Speicherplatzes, wobei in beschränkten Maße Vorkehrungen gegen Datenverlust im Falle des Defekts oder Ausfalls von kleineren Speicherbereichen vorgesehen sind. Fällt beispielsweise eine der Festplatten aus, so ist der Controller auf Grund seiner redundanten Speicherverwaltung im Stande, den damit einhergehenden Datenverlust wenigstens teilweise zu kompensieren, zumindest jedoch kann der Verlust des Großteils der bisher gespeicherten Daten verhindert und der bestimmungsgemäße Betrieb der Speichervorrichtung aufrechterhalten werden. Der Verlust bisher gespeicherter Daten bzw. das Aufrechterhalten des Betriebs der Speichervorrichtung ist jedoch nur nach Durchführung einer Reorganisierung der Speichervorrichtung durch den Controller selbst möglich, was dazu führt, dass während der Reorganisierung auf Grund der erhöhten Belastung keine oder kaum noch Daten gespeichert werden können. Was die Vermeidung von Datenverlust und die Aufrechterhaltung des bestimmungsgemäßen Betriebs anbelangt, so sind der Speichervorrichtung enge Grenzen gesetzt. Sollten beispielsweise zwei Festplatten der Speichervorrichtung ausfallen, so kann der Controller aufgrund der Menge von ihm nicht mehr zugänglichen Daten eine Reorganisation der Speichervorrichtung nicht mehr erfolgreich durchführen.

Darüber hinaus ist auch das Netzwerk 40 fehleranfällig, was dazu führen kann, dass die dem Netzwerk fehlerfrei eingespeisten Bild- und/oder Tondaten am seinem Ausgang verzögert, verzerrt oder im schlimmsten Fall gar nicht mehr erscheinen.

Aufgabe der vorliegenden Erfindung ist es daher, ein mehrkanaliges Bild- und/oder Tondaten-Verarbeitungs- und Speicherungssystem und ein Überwachungssystem, welches ein solches Bild- und/oder Tondaten-Verarbeitungs- und Speicherungssystem enthält, mit einer gegenüber dem bekannten Stand der Technik erhöhten Betriebssicherheit bereitzustellen.

Die Lösung der Aufgabe erfolgt durch die Merkmale der Ansprüche 1 oder 2 Vorteilhafte Ausgestaltungen der Erfindung sind Gegenstand der Unteransprüche.

Demgemäß wird ein Bild- und/oder Tondaten-Verarbeitungs- und Speicherungssystem bzw. -vorrichtung mit n voneinander unabhängigen Einheiten bereitgestellt, wobei n eine natürliche Zahl größer gleich zwei ist und jede der Einheiten: eine Datenverarbeitungsvorrichtung, welche einen ersten Abschnitt enthält, der digitale Bild- und/oder Tondaten komprimiert; sowie eine erste Speichervorrichtung und eine zweite Speichervorrichtung aufweist, denen dieselben, von der Datenverarbeitungsvorrichung bereitgestellten digitalen und komprimierten Bild- und/oder Tondaten zur Speicherung zugeführt werden. Jede Einheit bildet somit einen unabhängigen Kanal, in dem separat Daten eingespeist, komprimiert und abgespeichert werden. Die jeder Einheit zugeführten Daten werden nach der Komprimierung sowohl von einer ersten als auch von einer zweiten Speichervorrichtung gespeichert und liegen somit nach der Speicherung doppelt vor. Sollte eine der Speichervorrichtungen ausfallen, so können die bisher gespeicherten Daten noch von der anderen Speichervorrichtung abgerufen werden, die darüber hinaus immer noch zur Speicherung zukünftiger Daten zur Verfügung steht. Selbst wenn die andere Speichervorrichtung der betreffenden Einheit auch noch ausfallen sollte, sind lediglich davon die Daten des einen Kanals betroffen, da die über die anderen Kanäle bzw. Einheiten zugeführten, verarbeiteten und gespeicheren Daten in separaten Kanälen bzw. Einheiten gesondert behandelt werden. Somit wird einerseits die Gefahr minimiert, dass der Bild- und/oder Tondaten-Verarbeitungs- und Speicherungsvorrichtung eingespeiste Bild- und/oder Tondaten verloren gehen, und andererseits wird der bestimmungsgemäße Betrieb der Bild- und/oder Tondaten-Verarbeitungs- und Speicherungsvorrichtung insgesamt auch nach Ausfall einer oder mehrerer Einheiten bzw. Kanäle aufrechterhalten.

Des weiteren wird ein Überwachungssystem bzw. -vorrichtung bereitgestellt mit: n Kameras zur Aufnahme von Bild- und/oder Tondaten einer oder mehrerer Szenen, wobei n eine natürliche Zahl größer gleich zwei ist; einem Bild- und/oder Tondaten-Verarbeitungs- und Speicherungssystem mit n voneinander unabhängigen Einheiten; wobei jede der Einheiten eine Datenverarbeitungsvorrichtung, welche einen ersten Abschnitt enthält, der digitale Bild- und/oder Tondaten komprimiert; sowie eine erste Speichervorrichtung und eine zweite Speichervorrichtung aufweist, denen jeweils dieselben, von der Datenverarbeitungsvorrichtung bereitgestellten digitalen und komprimierten Bild- und/oder Tondaten zur Speicherung zugeführt werden. Die Kameras sind dabei jeweils lediglich einer der Einheiten zugeordnet und übertragen der ihnen jeweils zugeordneten Einheit die aufgenommenen Bild- und/oder Tondaten. Damit wird eine n-kanaliges Überwachungssystem geschaffen, welches die gleichen Vorteile wie diejenigen aufweist, die sich aus dem oben beschriebenen Bild- und/oder Tondaten-Verarbeitungs- und Speicherungssystem ergeben. Darüber hinaus ist zwischen der Datenverarbeitungsvorrichtung und Speichervorrichtungen eines Kanals zur Übertragung der Daten kein Netzwerk vorgesehen, wodurch sich die Betriebssicherheit weiter erhöht.

Die im Folgenden beschriebenen Weiterentwicklungen beziehen sich sowohl auf das Bild- und/oder Tondaten-Verarbeitungs- und Speicherungssystem als auch auf das Überwachungssystem, welche hier lediglich als "System" bezeichnet werden.

Die Datenverarbeitungsvorrichtung jeder Einheit enthält einen zweiten Abschnit, welcher dem ersten Abschnitt vorgeschaltet ist und analoge Bild- und/oder Tondaten digitalisiert. Somit können von dem System nicht nur digitale, sondern alternativ auch analoge Bild- und/oder Tondaten verarbeitet und gespeichert werden.

Die erste Speichervorrichtung und die zweite Speichervorrichtung jeder Einheit sind jeweils als Festplatte ausgebildet, wodurch ein zuverlässiges und kostengünstiges Speichermedium zur Verfügung gestellt wird.

Jede Einheit weist eine Fehlererfassungsvorrichtung auf, welche eine fehlerhafte Funktion der ersten und/oder zweiten Speichervorrichtung erfasst und anzeigt. Somit kann eine fehlerbehafte Komponente des Systems auf einfache Weise erkannt und durch eine funktionstüchtige Komponente ausgetauscht werden.

Des Weiteren weist jede Einheit eine Bild- und/oder Tondaten-Ausgabevorrichtung auf, welche derart konfiguriert ist, dass der Einheit augenblicklich zugeführte Bild- und/oder Tondaten in Echtzeit oder auf der ersten oder zweiten Speichervorrichtung bereits gespeicherte Bild- und/oder Tondaten zu einem beliebigen Zeitpunkt über einen Anschluss nach außen ausgegeben werden. Die verarbeiteten und gespeicherten Daten können somit in ein Netzwerk eingespielt werden, ohne dass die Speicherung der Daten durch in dem Netzwerk auftretende Störungen beeinflusst wird.

Der Austausch einer fehlerhaften Einheit wird dadurch erleichtert, dass jede Einheit in Form eines Blades gleich ausgebildet ist, wobei die Einheiten in einem Rack, insbesondere in einem 19-Zoll-Rack, angeordnet sind.

Eine Stromversorgungsvorrichtung weist zwei Teile auf, die derart konfiguriert sind, dass beide Teile die Vorrichtung gemeinsam mit elektrischem Strom versorgen können, jedes Teil aber auch alleine das System mit elektrischem Strom versorgen kann. Somit ist die Betriebssicherheit der Vorrichtung weiter erhöht.

Die Stromversorgung der Kameras erfolgt auf einfache Weise durch die Stromversorgungsvorrichtung, welche den von ihr bereitgestellten Strom der jeweiligen Kamera über die zugehörige bzw. zugeordnete Einheit einspeist.

Die oben beschriebenen Merkmale können miteinander kombiniert werden; für die Erfindung nicht wesentliche Merkmale können weggelassen werden.

Die vorliegende Erfindung wird in der nachfolgenden Beschreibung unter Bezugnahme auf die Figuren erläutert.
Fig. 1 zeigt schematisch ein n-kanaliges Überwachungssystem einer bevorzugten Ausführungsform der vorliegenden Erfindung; und
Fig. 2 zeigt schematisch ein n-kanaliges Überwachungssystem nach dem Stand der Technik.

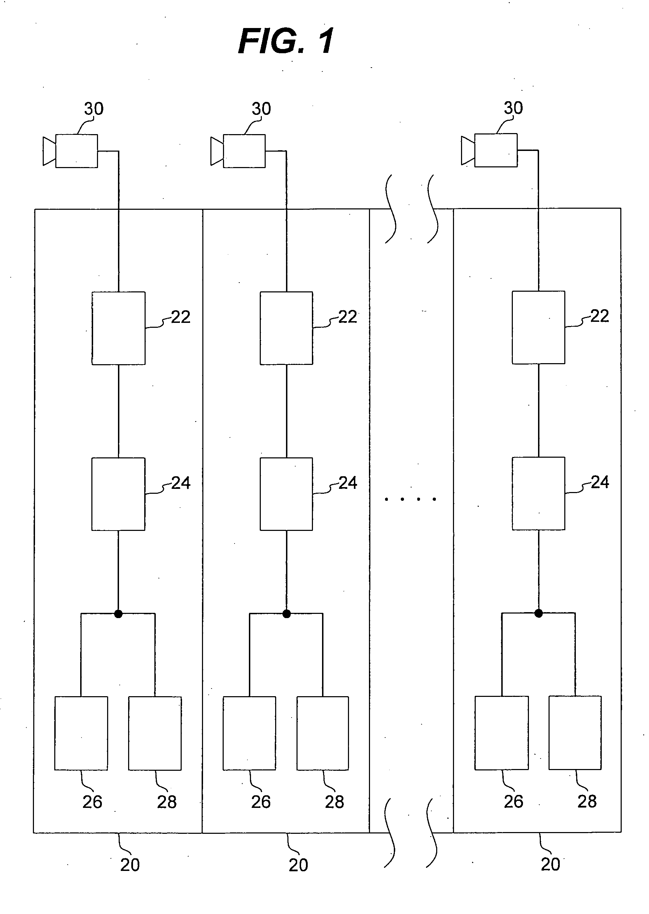

Gemäß Fig. 1 enthält ein n-kanaliges Überwachungssystem ein aus n Einheiten 20 gebildetes Bild- und/oder Tondaten-Verarbeitungs- und Speicherungssystem, wobei an jede Einheit eine Analogkamera 30 angeschlossen ist; n bezeichnet dabei eine natürliche Zahl, die gleich oder größer als zwei ist. Für die bevorzugte Ausführungsform weist n einen Wert von dreizig auf. Das Überwachungssystem dient der lokalen Überwachung eines "hot Spots", beispielsweise eines Verkehrsknotenpunkts oder eines von vielen Passsanten besuchten Platzes, wobei an dem zu überwachenden Ort bis zu n Kameras geeignet positioniert sind. Die Kameras weisen jeweils einen Bild- und/oder Tonabschnitt auf, mit deren Hilfe aufeinanderfolgende Ereignisse an dem Ort und in seiner Umgebung visuell und/oder akustisch erfasst werden. Denkbar, wenn auch ungewöhnlich, ist dabei die Erfassung von Ereignissen lediglich auf akustischer Grundlage. Im einfachsten Fall wäre dann die Kamera durch ein Mikrofon zu ersetzen. Die jeweiligen Kameras sind über geeignete, vorzugsweise abgeschirmte Leitungen, deren Länge zur Minimierung von Störeinflüssen möglichst kurz sein sollte, mit dem n-kanaligen Bild- und Tondaten-Verarbeitungs- und Speicherungssystem verbunden, das in Bezug auf die Verarbeitung und Speicherung von Daten aus n unabhängigen Einheiten 20 gebildet ist.

Die jeweiligen Einheiten 20 enthalten an ihrem Eingang eine Datenverarbeitungsvorrichtung, welche sich aus einem ersten Abschnitt 24, einem Codierer, und optional einem zweiten Abschnitt 22, einem Analog/Digital-Wandler, zusammensetzt. Der zweite Abschnitt 22 und der erste Abschnitt 24 sind dabei in Reihe geschaltet, wobei der zweite Abschnitt dem ersten Abschnitt vorgeschaltet ist. Der Ausgang des ersten Abschnitts 24 ist mit dem Eingang einer Parallelschaltung verbunden, die sich aus einer ersten Speichervorrichtung 26 und aus einer zweiten Speichervorrichtung 28 zusammensetzt. An dieser Stelle sollte darauf hingewiesen werden, dass Fig. 1 nur das Funktionsschema des Systems der vorliegenden Erfindung wiedergibt. Weitere Komponenten der vorliegende Erfindung, welche die bereits angeführten Komponenten mit Strom versorgen oder für deren bestimmungsgemäßen Betrieb, insbesondere für deren Koordinierung, sorgen, sind aus Gründen der Übersichtlichkeit in Fig. 1 weggelassen. Darüber hinaus ist es einem Durchschnittsfachmann aufgrund seines Fachwissens möglich, nach Kenntnis der unten beschriebenen Funktion der Komponenten deren konkrete Beschaltung bzw. Verdrahtung vorzusehen.

Im Folgenden wird schematisch beschrieben, wie die Daten je Kanal verarbeitet und abgespeichert werden. Die von der Kamera eines Kanals aufgenommenen Bild- und/oder Tondaten werden für den Fall, dass es sich dabei um Analogdaten handeln sollte, dem zweiten Abschnitt 22 zugeführt, der eine Analog/Digital-Wandlung der ihm zugeführten Daten durchführt. Sollte es sich bei der Kamera um eine Digitalkamera handeln, deren ausgegebene Daten bereits digital vorliegen, kann der zweite Abschnitt weggelassen bzw. überbrückt werden. Der dem zweiten Abschnitt 22 nachgeschaltete erste Abschnitt 24 ist ein Codierer, welcher die ihm zugeführten Bild- und/oder Tondaten komprimiert, wodurch die Menge der weiterzuverarbeitenden Daten verringert wird. Die von dem ersten Abschnitt 24 komprimierten Bild- und/oder Tondaten werden sowohl einer ersten Speichervorrichtung 26 als auch einer zweiten Speichervorrichtung 28 zugeführt, die beispielsweise als Festplatten (HDD, Hard Disk Drive) einer Kapazität von 250 GByte, 500 GByte oder 750 GByte ausgebildet sind. Die Abspeicherung der Daten auf der ersten und zweiten Speichervorrichtung 26, 28 erfolgt in Echtzeit und nahezu zeitgleich. Die Verarbeitung und die Abspeicherung der Daten des Kanals erfolgt dabei unter der Leitung eines oder mehrerer nicht dargestellter Controller, welche für die bestimmungsgemäße Funktion und Koordinierung der Komponenten 22, 24, 26 und 28 sorgen. Die Ansteuerung der Kameras 30 kann ebenfalls unter der Leitung eines Controllers erfolgen.

Der oder die für jede Einheit 20 vorgesehenen Controller überprüfen periodisch die Funktionsfähigkeit der jeweiligen ersten und zweiten Speichervorrichtung 26, 28 und erzeugen im Falle des Feststellen eines Defekts oder eines Ausfalls einer oder beider Speichervorrichtungen einer Einheit 20 des betreffenden Kanals eine optische und/oder akustische Warnung.

Eine pro Einheit 20 bzw. Kanal vorgesehene Ausgabeeinheit sorgt unter Leitung eines Controllers dafür, dass die der jeweiligen Einheit augenblicklich zugeführten, gegebenenfalls digitalisierten, in jedem Fall jedoch komprimierten Daten direkt im Anschluss an die Komprimierung, aber auch die bereits auf einer der Speichervorrichtungen 26, 28 gespeicherten Daten an einen in Fig. 1 nicht dargestellten Ausgangsanschluss übertragen werden, von dem aus die Daten wiederum einem Netzwerk wie einem LAN oder einem globalen Netzwerk wie dem Internet übergeben werden können, so dass die von der Kamera augenblicklich aufgenommenen Bild- und/oder Tondaten in Echtzeit oder die bereits gespeicherten Daten eines jeden Kanals getrennt voneinander an einen beliebigen Ort zur Auswertung gelangen können.

Die jeweiligen Einheiten 20 sind in Form eines Blades gleich ausgebildet, so dass sie im Falle eines Ausfalls leicht ersetzt werden können. Insbesondere hat sich die Anordnung der Einheiten in ihrer Gesamtheit in einem Rack, insbesondere in einem 19-Zoll-Rack, als vorteilhaft erwiesen. Das Rack ist mit einer Backplane ausgestattet, die dem System eine redundante Stromversorgung bereitstellt. Die Stromversorgung enthält dabei zwei Teile, welche das System entweder im normalen Betrieb gemeinsam (alternierend unter Volllast oder gleichzeitig unter halber Last) oder aber auch bei Ausfall von einem Teil allein mit elektrischem Strom hinreichend versorgen können. An dieser Stelle sei darauf hingewiesen, dass die zwei Teile der Stromversorgung nicht nur die Einheiten 20, sondern ebenfalls die mit den Einheiten jeweils verbundenen Kameras 30 über das dazwischen vorgesehene Verbindungskabel mit elektrischem Strom versorgen.

## Patentansprüche

1. Bild- und/oder Tondaten-Verarbeitungs- und Speicherungssystem mit n voneinander unabhängigen Einheiten (20), wobei n eine natürliche Zahl größer gleich zwei ist und jede der Einheiten:
eine Datenverarbeitungsvorrichtung, welche einen ersten Abschnitt (24) enthält, der digitale Bild- und/oder Tondaten komprimiert, sowie
eine erste Speichervorrichtung (26) und eine zweite Speichervorrichtung (28) aufweist, denen dieselben, von der Datenverarbeitungsvorrichtung komprimierten Bild- und/oder Tondaten zur Speicherung zugeführt werden.

2. Überwachungssystem (10) mit:
n Kameras (30) zur Aufnahme von Bild- und/oder Tondaten, wobei n eine natürliche Zahl größer gleich zwei ist,
einem Bild- und/oder Tondaten-Verarbeitungs- und Speicherungssystem mit n voneinander unabhängigen Einheiten (20), wobei jede der Einheiten:
eine Datenverarbeitungsvorrichtung, welche einen ersten Abschnitt (24) enthält, der digitale Bild- und/oder Tondaten komprimiert, sowie
eine erste Speichervorrichtung (26) und eine zweite Speichervorrichtung (28) aufweist, denen jeweils dieselben, von der Datenverarbeitungsvorrichtung komprimierten Bild- und/oder Tondaten zur Speicherung zugeführt werden, wobei
die Kameras (30) jeweils lediglich mit einer der Einheiten (20) verbunden sind und die von den jeweiligen Kameras aufgenommenen Bild- und/oder Tondaten lediglich der einen Einheit übertragen werden.

3. System nach einem der vorhergehenden Ansprüche, **dadurch gekennzeichnet, dass** die Datenverarbeitungsvorrichtung jeder Einheit (20) einen zweiten Abschnitt (22) enthält, welcher dem ersten Abschnitt (24) vorgeschaltet ist und analoge Bild- und/oder Tondaten digitalisiert.

4. System nach einem der vorhergehenden Ansprüche, **dadurch gekennzeichnet, dass** die erste Speichervorrichtung (26) und die zweite Speichervorrichtung (28) jeder Einheit (20) als Festplatte ausgebildet sind.

5. System nach einem der vorhergehenden Ansprüche, **dadurch gekennzeichnet, dass** jede Einheit (20) eine Fehlererfassungsvorrichtung aufweist, welche eine fehlerhafte Funktion der ersten und/oder zweiten Speichervorrichtung (26, 28) erfasst und anzeigt.

6. System nach einem der vorhergehenden Ansprüche, **dadurch gekennzeichnet, dass** jede Einheit (20) eine Bild- und/oder Tondaten-Ausgabevorrichtung aufweist, welche derart konfiguriert ist, dass der Einheit von der Kamera zugeführte Bild- und/oder Tondaten in Echtzeit oder auf der ersten oder zweiten Speichervorrichtung (26, 28) bereits gespeicherte Bild- und/oder Tondaten über einen Anschluss nach außen ausgegeben werden.

7. System nach einem der vorhergehenden Ansprüche, **dadurch gekennzeichnet, dass** jede Einheit (20) in Form eines Blades gleich ausgebildet ist, wobei die Einheiten in einem Rack, insbesondere in einem 19-Zoll-Rack, angeordnet sind.

8. System nach einem der vorhergehenden Ansprüche, **gekennzeichnet durch** eine Stromversorgungsvorrichtung, welche zwei Teile aufweist, die derart konfiguriert sind, dass beide Teile das System gemeinsam mit elektrischem Strom versorgen, jedes Teil aber auch alleine das System mit elektrischem Strom versorgen kann.

9. System nach einem der Ansprüche 2 bis 8, **dadurch gekennzeichnet**, die Stromversorgung der jeweiligen Kameras (30) über die mit ihr verbundene Einheit erfolgt.
